(19) Europäisches Patentamt
European Patent Office
Office européen des brevets

(11) **EP 2 983 125 A1**

(12) **EUROPEAN PATENT APPLICATION**

(43) Date of publication:
**10.02.2016 Bulletin 2016/06**

(51) Int Cl.:
***G06Q 40/08*** (2012.01)          ***G06Q 30/06*** (2012.01)
***G06Q 50/10*** (2012.01)

(21) Application number: **15179500.2**

(22) Date of filing: **03.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.08.2014 IN MU25012014**

(71) Applicant: **Tata Consultancy Services Limited Mumbai 400 021 (IN)**

(72) Inventors:
• **SINGH, Vineet Kumar London, SW1X 7HY (GB)**
• **ROY, Srijeeb 700091 Kolkata (IN)**
• **KACHROO, Vinod K Edison, NJ New Jersey 08837 (US)**

(74) Representative: **Heinze, Ekkehard Meissner, Bolte & Partner GbR Widenmayerstrasse 47 80538 München (DE)**

(54) **SYSTEM AND METHOD FOR RECOMMENDING SERVICES TO A CUSTOMER**

(57)     The present subject matter discloses system and method for recommending one or more services to customers. At first, the customers and service providers gets registered with the system. Further, customer-activities and entity-activities of one or more entities present in a network of the customer may be monitored. Further, the customer-activities and entity-activities may be processed for determining a current-stage information and life-event associated with the customer. The current-stage information may include behavioral pattern, lifestyle, liabilities, location, purchasing capability, and assets of the customer. Based on the life-event, one or more future-actions may be determined by the system. Further, the system recommends at least one service of the plurality of services to the customer based on the current-stage information and the one or more future-actions.

Figure 3A

EP 2 983 125 A1

**Description**

CROSS-REFERENCE TO RELATED APPLICATIONS AND PRIORITY

The present application claims priority to Indian Provisional Patent Application No. 2501/MUM/2014, filed on August 04th, 2014, the entirety of which is hereby incorporated by reference.

TECHNICAL FIELD

The present subject matter described herein, in general, relates to system and method for recommending one or more services to a customer.

BACKGROUND

In multiline insurance, a contract is made to bundle together different types of insurance policies. The multiline insurance combines property, life, health, wealth management, and casualty risks together into a single policy. A multiline contract is attractive in nature because a common aggregate deductible can be offered on a policy portfolio that covers several risk types. However, for providing multiline insurance, multiple insurers are needed for maintaining relationships with different levels of contracts such as life, health, property and casualty. Since, today's world envisions personalization, for providing digitization or automation of a personalized service, knowledge harvesting about an individual person and its relationship or entity is essential. This goes beyond traditional data analytics and leads to the space of perception, inference and other cognitive approaches.

In the insurance domain, lot of research and innovations are aiming at 'Expert Systems', 'Intelligent agents' or 'Virtual Bots', as being a 'personal assistant' to deliver individual's needs and preferences. However, to date, existing techniques available for facilitating customer's needs are getting addressed in part of silos primarily with historical data mining and analytics being run independently for each department, industry or company (as disparate data sources/domains). Thus, industries and companies may not integrate and aligne their offerings to the customer needs. Moreover, the cross co-relational data mining to generate cognitive patterns, predictions and forecasting are lacking in the art.

The customer associated with home are in the area of buying, managing and selling, and ensuring greater value of the home. However, most of the industries handle only part of the solution. For example, home improvement and retail companies are limited in providing home related items and services. Financial services companies to fund mortgage or loan. Similarly, utility companies are limited in providing electricity, gas and water. Further, the insurance companies only provide risk assurance. Thus, there is a lack of end to end solution focusing on customer's requirements and expectations leading to limited engagement, experience and value creation.

SUMMARY

This summary is provided to introduce aspects related to systems and methods for recommending one or more services to a customer and the concepts are further described below in the detailed description. This summary is not intended to identify essential features of subject matter nor is it intended for use in determining or limiting the scope of the subject matter.

In one implementation, a system for recommending one or more services to a customer is disclosed. The system comprises a processor and a memory coupled to the processor. The processor executes a plurality of modules stored in the memory. The plurality of modules comprises a monitoring module, a processing module, a determining module, a recommending module, and a generating module. The monitoring module may monitor customer-activities of a customer from amongst a plurality of customers and entity-activities of one or more entities present in a network of the customer, from one or more sources. The network may define a relationship between the customer and the one or more entities. Further, the processing module may process at least one of the customer-activities and the entity-activities in order to determine current-stage information of the customer and a life-event occurring in a life of the customer. The current-stage information may comprise behavioral pattern, life-style, liabilities, location, purchasing capability, and assets of the customer. Further, the determining module may determine one or more future-actions of the customer based on the occurrence of the life-event. Further, the recommending module may recommend at least one service of a plurality of services to the customer based on the current-stage information and the one or more future-actions.

In another implementation, a method for recommending one or more services to a customer is disclosed. The method comprises monitoring, by the processor, customer-activities of a customer and entity-activities of one or more entities present in a network of the customer, from one or more sources. The network may define a relationship between the customer and the one or more entities. Further, the method comprises processing, by the processor, at least one of the customer-activities and the entity-activities in order to determine a current-stage information of the customer and a life-event occurring in a life of the customer. The current-stage information comprises behavioral pattern, life-style, liabilities, location, purchasing capability, and assets of the customer. The method may further comprise determining, by the processor, one or more future-actions of the customer based on the occurrence of the life-event. Further, the method may comprise recommending, by the processor, at least one service of the plurality of services to the customer based on the current-stage information and the one or more future-actions.

In yet another implementation a non-transitory computer readable medium embodying a program executable in a computing device for recommending one or more services to a customer is disclosed. The program comprises a program code for monitoring customer-activities of a customer from amongst a plurality of customers and entity-activities of one or more entities present in a network of the customer, from one or more sources. The network may define a relationship between the customer and the one or more entities. The program may further comprise a program code for processing at least one of the customer-activities and the entity-activities in order to determine current-stage information of the customer and a life-event occurring in a life of the customer. Further, the current-stage information may comprise behavioral pattern, life-style, liabilities, location, purchasing capability, and assets of the customer. Further, the program may comprise a program code for determining one or more future-actions of the customer based on the occurrence of the life-event. The program may further comprise a program code for recommending at least one service of the plurality of services to the customer based on the current-stage information and the one or more future-actions.

BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.

Figure 1 illustrates a network implementation for recommending one or more services to customer, in accordance with an embodiment of the present subject matter.

Figure 2 illustrates architecture diagram of a system for recommending one or more services, in accordance with an embodiment of the present subject matter.

Figures 3A-3G illustrates an example for recommending one or more services, in accordance with an embodiment of the present subject matter.

Figure 4 is a flow diagram depicting an example method for recommending one or more services to a customer, in accordance with an embodiment of the present disclosure.

DETAILED DESCRIPTION

Systems and methods for recommending one or more services to a customer are disclosed. The present disclosure provides an ecosystem platform for recommending the one or more services. At first, a plurality of service providers, providing plurality of services, and plurality of customers may get registered with the system. The plurality of services are not only limited to traditional services like insurance, savings plans, investment schemes, but it also encompasses services provided by utilities companies, services provided by home improvement companies as these are essential to have a risk mitigated life style. For example, the utility providers may ensure good running hot water boiler in home through maintenance and servicing. The home improvement companies may ensure roof damages are fixed. The customers' requirements are not only limited to home, health, investment, and car, but also have cross-domain concerns such as independently aging as a cross section of home and health, retirement and health, and so on.

According to embodiments of present disclosure, the system may also be referred as "My Personal Assistant", for providing a personalized assistance to the customers on the common platform. Further, the system may integrate home, health, car, investment insurance data, and an architecture and methodology therein orchestrating synergistic customer engagements across different life stages of the customers by ontology driven, cross co-relational data analytics across disparate industry data to meet the customer requirements in seamless manner. The system may further monitor customer-activities of the customers and entity-activities of one or more entities present in a network of the customers. The system may further incorporate behavioral and social analytics based on such activities monitored (customer-activities and entity-activities) collected from various disparate sources, artificial intelligence, machine learning based techniques to manage life styles and deliver proactive advice to the customers. The system may further deliver customer engagement through a mobile device/portal based dashboard or a robotic humanoid. According to embodiments of present disclosure, the system may enable a single customer to maintain multiple relationships with different types of contracts such as life, health and property, casualty and the like. Hence, the present disclosure deals with integration of various industries or solutions to provide one stop solution for meeting end-to-end requirements of the plurality of customers on a common platform.

While aspects of described system and method for recommending the one or more services to the customer may be implemented in any number of different computing devices, environments, and/or configurations, the embodiments are described in the context of the following exemplary devices.

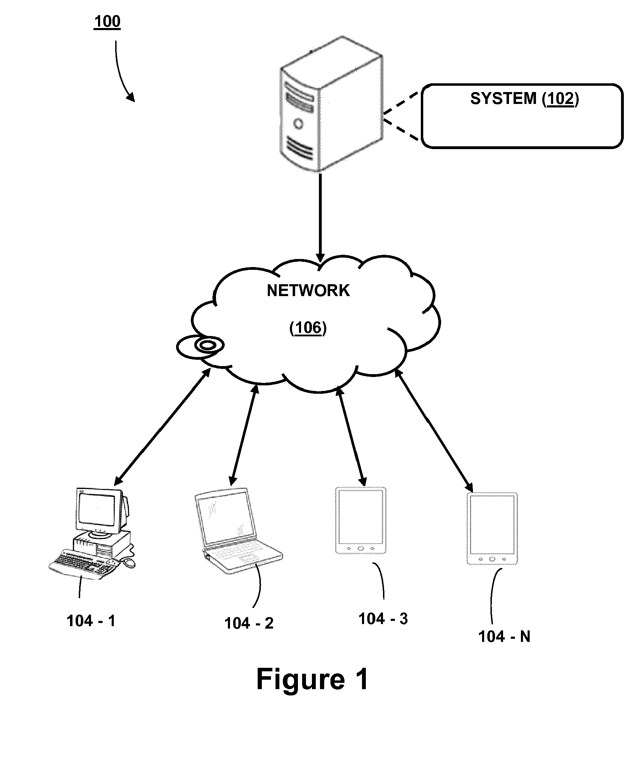

Referring to Figure 1, a network implementation 100 for recommending one or more services to a customer is illustrated, in accordance with an embodiment of the present subject matter. The network implementation 100 is shown to include a system 102, user devices such as user devices 104-1, 104-2...104-N, and a communication network 106 for facilitating communication between the system 102 and the user devices 104-1, 104-2... 104-N. In one embodiment, the system 102 facilitates common platform for recommending the one or more services by integrating various industries or solutions for meeting customers' end to end requirements. Although the present subject matter is explained considering that the system 102 is implemented as a software application on a server, it may be understood that the system 102 may also be implemented as a variety of computing systems, such as a laptop computer, a desktop computer, a notebook, a workstation, a mainframe computer, a network server, a tablet, a mobile phone, a robot and the like. In one implementation, the system 102 may be implemented in a cloud-based environment. It will be understood that the system 102 may be accessed by multiple users through the one or more user devices 104-1, 104-2...104-N, collectively referred to as user devices 104 hereinafter, or applications residing on the user devices 104. Examples of the user devices 104 may include, but are not limited to, a portable computer, a personal digital assistant, a handheld device, and a workstation.

In one implementation, the communication network 106 may be a wireless network, a wired network or a combination thereof. The communication network 106 can be implemented as one of the different types of networks, such as intranet, local area network (LAN), wide area network (WAN), the internet, and the like. The communication network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

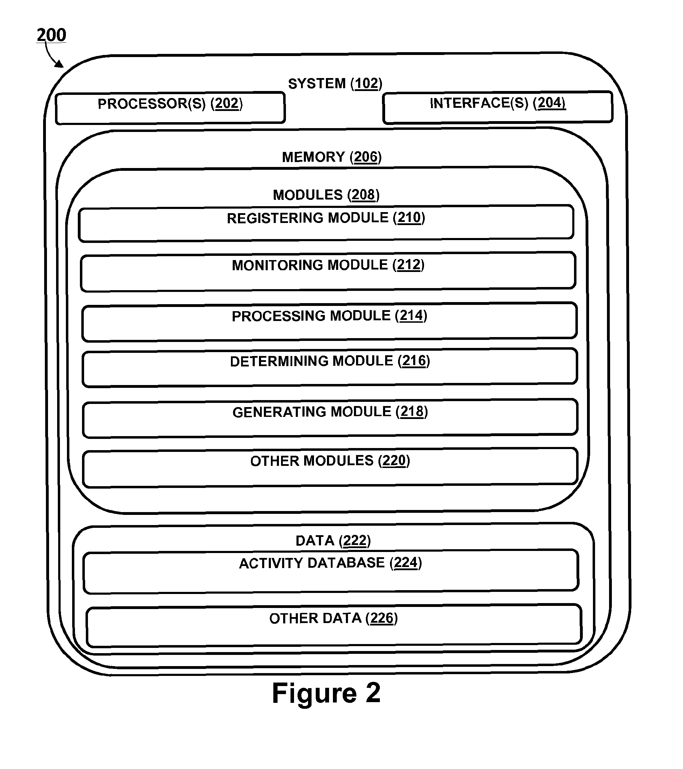

Referring now to Figure 2, an architecture diagram of a system 200 for recommending one or more services is illustrated in accordance with an embodiment of the present disclosure. In one embodiment, the system 200 is an example of the system 102 (Figure 1). In one embodiment, the system 200 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor is configured to fetch and execute computer-readable instructions or modules stored in the memory 206.

The I/O interface 204 may include a variety of software and hardware interfaces, for example, a web interface, a graphical user interface, and the like. The I/O interface 204 may allow the system 200 to interact with a user (for instance, a customer) directly or through the client devices 104 (Figure 1). Further, the I/O interface 204 may enable the system 200 to communicate with other computing devices, such as web servers and external data servers (not shown). The I/O interface can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, a compact disks (CDs), digital versatile disc or digital video disc (DVDs) and magnetic tapes. The memory 206 may include modules 208 and a data 222.

The memory 206 may include routines, programs, objects, components, data structures, etc., which perform particular tasks or implement particular abstract data types. In one implementation, the modules 208 may include a registering module 210, a monitoring module 212, a processing module 214, a determining module 216, generating module 218, and other modules 220. The other modules 216 may include programs or coded instructions that supplement applications and functions of the system 200.

The data 222, amongst other things, serves as a repository for storing data processed, received, and generated by one or more of the modules 208. The data 222 may also include, an activity database 224 and other data 226.

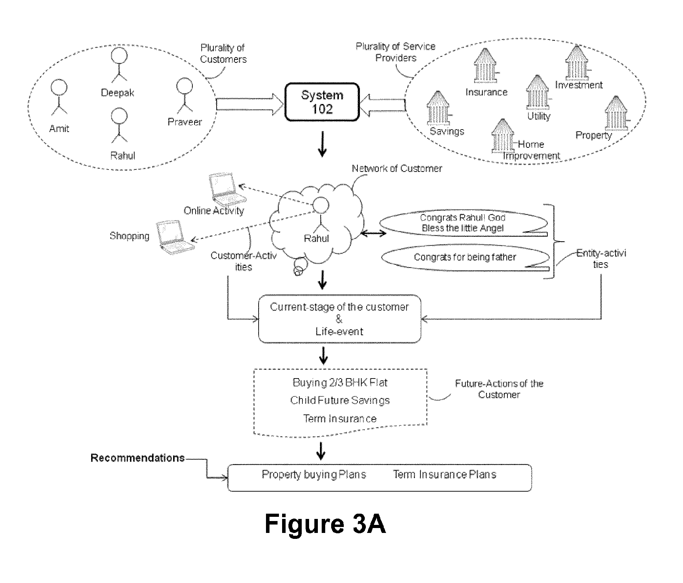

Referring now to Figures 3A-3D, illustrates an example for recommending one or more services to the customer, in accordance with an embodiment of the present subject matter. In an embodiment, the system 102 (Figure 1) provides an ecosystem platform for the recommending the one or more services. As an example shown in figure 3A, a plurality of customers (for example, Amit, Rahul, Deepak, and Praveer) and a plurality of service providers providing plurality of services, may get registered, by the registering module 210, with the system 102. The services provided in the present disclosure will not be limited to traditional products such as insurance, savings and/or investments. It will also encompass services provided by utilities companies, services provided by home improvement companies as these are essential to have a risk mitigated life style. During the registration, the plurality of customers may provide their personal details comprising name, age, sex, marital status, income etc to the system 102. Also, the service providers during the registration may provide details of their services provided by them to the customers. In this example, we have considered "Rahul" as the customer for explaining the further steps of the present disclosure. Further, a relationship graph may be generated for Rahul, by the system 102, indicating different groups of people in different relations. In one example, the graph generated for Rahul is shown below.

Graph: Relationship Graph

From the above graph, it can be seen that there may be different groups of people associated within the network of Rahul in different relationships. For example, one group may be "Family" which may include those people who are in Rahul's family. Similarly, another group may be "Relatives" which may include those people who are Rahul's relatives. Further, another group may be "Friends" which may include those people who are Rahul's friend. Further, another group may be "Colleagues" which may include those people who are Rahul's colleague. According to embodiments of present disclosure, there may be n number of groups (not shown) in the above relationship graph of Rahul. Further, based on the relationship graph, the level of influence or weightage may vary from one group to another. For example, in certain needs, Rahul may trust his colleagues. However, on others needs, Rahul may trust his family.

In next step, the monitoring module 212 of the system 102 may monitor customer-activities of the customer and entity-activities of one or more entities present in a network of the customer, from one or more sources. The network defines a relationship of the customer with the one or more entities who may be family, relations, or friends or colleagues. The customer-activities may comprise transactional activities and non-transactional activities performed by the customer (Rahul). Further, the entity-activities may comprise social activities performed by the one or more entities. Further, the one or more sources may comprise, but not limited to, social networking applications, web applications, and shopping applications accessed by the customer (Rahul).

Further, the customer-activities indicate the activities performed by Rahul which may be continuously monitored by the monitoring module 212. For example, Rahul may be shopping for baby products on shopping websites, Rahul may be looking for a new car on car related websites, Rahul may be looking for a home on property websites, or other types of online activities performed by Rahul. Further, the entity-activities indicate the activities performed by a family member in the family of Rahul, by a person in Rahul's relation, or by a friend of Rahul who are connected with Rahul in his network. As shown in the figure 3A, one of Rahul's family members may post a comment "Congrats Rahul! God bless the little Angel" on Rahul's wall of a social media platform. Further, another comment "Congrats for being father" may be posted by one of Rahul's friend on the wall of social media platform. Thus, all the above activities (i.e., Rahul's activities and his family and friends comments) are continuously monitored by the monitoring module 212 of the system 102. Further, the customer-activities and the entity-activities may be stored in the activity database 224 of the system 102.

Further, all the customer-activities and the entity-activities (as explained above) may be processed by the processing module 214 of the system 102 in order to determine current-stage information of the customer (Rahul) and a life-event occurring in a life of Rahul. The current-stage information of Rahul may comprise behavioral pattern, life-style, liabilities, location, purchasing capability, and assets of Rahul. In this present example, the current-stage information of Rahul can be seen in below table.

| Behavioral Pattern | Normal |
| --- | --- |
| Life-style | General |
| Liabilities | Loan Payments |
| Location | Pune |
| Purchasing capability | Need basis |
| Assets | Land worth 40 lakhs |

Further, based on the comments (i.e., entity activities) provided on the Rahul's wall of social media, the processing module 214 may determine that Rahul has become a father, and hence he is stepped into a new phase/stage of his life. According to embodiments of present disclosure, comments on social media wall may also be considered. Further, the comments may be validated by transactions, for example, financial transaction performed by Rahul's wife with healthcare products. In this example, becoming a father or having a baby is considered as the life-event for Rahul. According to embodiments of present disclosure, there may be triggered other types of life-events associated with the customers. After becoming the father, Rahul may have certain plans for future of his family.

Thus, in the next stage, the determining module 216 of the system 102 may determine one or more future-actions of the customer (Rahul) based on the occurrence of the life-event. In one example, the future-action may include shifting home, if it is the newly born baby and the customer (Rahul) along with his wife is living in a one room apartment on rent. If Rahul is already living in two bed room apartment, then there may be no changes. In another example, if Rahul lives along with parents, and size of the house is 2 bedroom, then the future-action may be shifting home from 2 bed room to 3 bed room. Further, the other future-actions determined by the determining module 216 may be that Rahul will buy a house in a district having good schools 3 - 4 years from child birth, savings plans for the child, and term insurances. The future actions are determined based on current details of Rahul. For example, Rahul had a two door car, and after becoming a father he may buy a 4 door car as he needs to carry baby in the car. Another future action may be like Rahul may plan for buying education plan. Thus, based on the life-events, the user may take several future-actions. Few examples of the life-events and their corresponding future-actions is shown in the below table.

| Life event | Future Actions/Effects |
| --- | --- |
| User going somewhere (Travel, meeting etc.) | 1. Forecast - Weather, Road condition<br>2. If Travelling by air suggest purchasing insurance<br>3. If Weather/Road condition is bad suggest purchase travel insurance<br>4. If user doesn't have new car and travelling far, suggest him car rental (based on user's financial status) |
| Relocation | 1. If moving to new city suggest like concierge service<br>2. Suggest Movers and packers<br>3. Suggest about destinations<br>4. Give an idea about rentals and localities |
| Getting married | 1. Marriage planning based on locality and income<br>2. Suggest honeymoon packages<br>3. Purchase/Rent a bigger house<br>4. Suggest a locality which will be in between their work location (by zip code) |
| Having Baby | 1. Pregnancy Planning (Suggest good doctor in that locality)<br>2. Purchase bigger car<br>3. Purchase/Rent a house in good locality by zip code<br>4. Purchase/Rent a bigger house<br>5. Predict based on family sizes like # rooms, Cars, Insurance<br>6. Change medical insurance |

(continued)

| Life event | Future Actions/Effects |
|---|---|
| Buying a Car | 1. Suggest dealers and deals around<br>2. Car Insurance or Group Policy<br>3. Car features/ safety equipment required based on location<br>4. Suggest based on purchasing pattern, like if car lease is expiring |
| Buying a home | 1. Suggest realtor<br>2. Suggest Best possible house location<br>3. Predicting home features required<br>4. Suggest Loans |
| Kids Education | 1. Predict for all stages of education like school, college<br>2. Suggest investment options for kid's education.<br>3. Suggest how to pursue their hobbies<br>4. Suggest during their life event changes |
| Retirement | 1. Suggest investments for retirement incomes<br>2. Suggest/Visualize their retirement goals |
| Investments | 1. Suggest investments which in-line with his goals like long term financial, retirement, education, hobby<br>2. Suggest low cost financial securities like term policies<br>3. Suggest how to get rid of liabilities |
| Expenses | 1. Suggest based on income and purchasing capability vs. required instrument<br>2. Suggest different savings utilities |

Based on the above table, there may be other future-actions also which Rahul may want to perform after becoming the father. But, executing of all the future-actions may not be possible for various reasons like financial capability, current liabilities or other reasons. The system 102 further discloses a method for determining distance from the life-event. For the life-event "having a baby", there are several future-actions listed in the above table. Considering the future-action i.e., "'Change Medical Insurance" from the above table, let us understand the concept of determining the distance from the life-event.

It may be observed that when someone is going to have a baby, he/she will probably need better pregnancy insurance before having a baby or even after having the baby to cover several aspects of Baby's health. But this need of insurance may vary depending on the distance of the actual life-event. In reality, say before 6 months of the delivery of the baby, the need of taking insurance for the baby is much lower or zero, whereas after the delivery of the baby, they are certainly going to need the insurance.

Now, if this need is considered as strength of the effect, then we may assume the below table to understand it in more detail. The 0 means the life-event (e.g.: the baby will born) will happen in this time.

| Interval in Month (Distance from the event) | Strength: Pregnancy insurance | Strength: adding baby in insurance |
|---|---|---|
| -6 | 5 | 0 |
| -5 | 5 | 0 |
| -4 | 5 | 0 |
| -3 | 4 | 0 |
| -2 | 3 | 0 |
| -1 | 1 | 0 |
| 0 | 0 | 5 |
| 1 | 0 | 5 |
| 2 | 0 | 5 |

(continued)

| Interval in Month (Distance from the event) | Strength: Pregnancy insurance | Strength: adding baby in insurance |
|---|---|---|
| 3 | 0 | 5 |
| 4 | 0 | 5 |
| 5 | 0 | 5 |
| 6 | 0 | 5 |

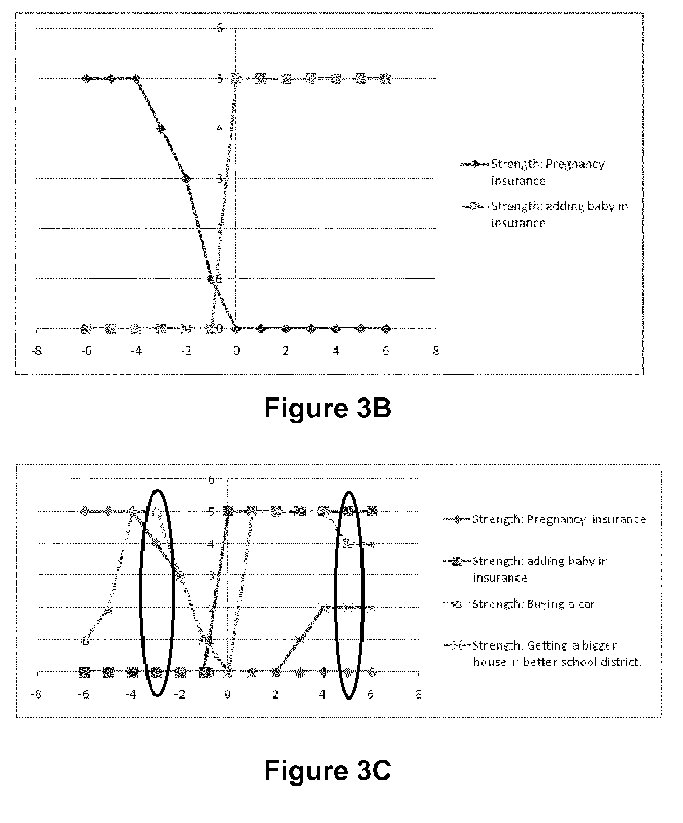

From the above table, it may be observed that six months before the strength of pregnancy insurance is 5, but one month before its strength is only 1. This may be assumption that if someone has not taken the pregnancy insurance even before a month, then they probably ignore the suggestion/prediction for long time, and really do not need the pregnancy insurance. Whereas six months earlier it may be the highest priority, if they have not taken the insurance. It may be noted, that the scoring interval expansion shown in the above table is not restricted. The scoring interval may be given in terms of weeks or even days. Also, the above scoring interval may vary for individual life-events. In one case, the system 102 may suggest to give it in weeks. Further, the strength of the two individual effects/predictions (Pregnancy insurance and adding baby in insurance) can be plotted on a graph as shown in figure 3B. In the figure 3B, the X axis denotes the distance from the life-event and Y axis is the strength of the effect (varies with distance).

Further, let us take an example of an effect or prediction, which may itself be a sub-event. When someone is going to have a baby, then he/she may need a bigger car. Now, if the system 102 knows that they have a smaller car, then it can predict this effect, and suggest accordingly. Again, the strength of this suggestion may vary depending on the distance. In this case it will span both negative axis and positive axis of the distance. The strength of this effect is shown in below table.

| Interval in Month | Strength: Buying a car |
|---|---|
| -6 | 1 |
| -5 | 2 |
| -4 | 5 |
| -3 | 5 |
| -2 | 3 |
| -1 | 1 |
| 0 | 0 |
| 1 | 5 |
| 2 | 5 |
| 3 | 5 |
| 4 | 5 |
| 5 | 4 |
| 6 | 4 |

The strength numbers as shown in the above table is an example and are given from assumption and observations. For example, the user may think of buying a new car three months earlier, but prior to couple of months left from delivery of the baby, the user may not be able to concentrate to buy a new car. So, though the strength of the buying a bigger car was higher three months prior to delivery of the baby, but the strength got lower prior to two months. Whereas, after the delivery, the strength of buying a new car is again higher (if he/she still not bought a new car or ignored the system's 102 suggestion). The above conditions for determining strength are an example. There may be n number of other factors which may be considered for determining the strength/score. Further, the various effects/predictions may be generated by the system 102 which is shown in figure 3C.

Referring to figure 3C, it may be observed that the strength of buying a bigger car may be higher three months earlier than adding baby in insurance (in fact adding baby in insurance has zero strength, prior to having a baby).

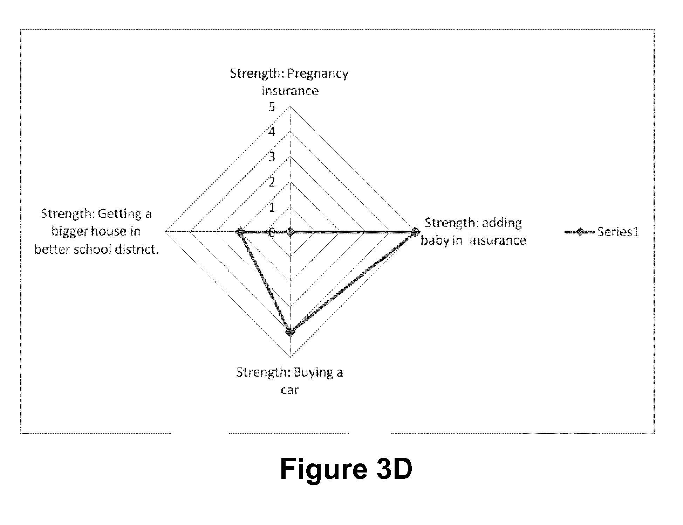

Whereas, after five months of the birth of the baby, it can be observed that that adding baby in insurance has the highest strength. Further, the figure 3D gives the snapshot after five month of the baby birth.

Further, the above strength/scoring model varies on different factors and information which are available with the system 102 or accessible by the system 102. The information, which can affect this scoring may comprise "Personal Data", "Past Life Events of the Person", "Payment History from Bank or Credit Card", "Policy Information", "Investment Information", "Home Information", "Vehicle Information", and "Social Media Information".

For example if the user has already bought a bigger car no more than three years earlier, then 'Buying a bigger Car' may have the weightage/score 0. Similarly, if the user is already having a bigger house in a good school district, then this suggestion is not a valid suggestion from the system 102. So, the weightage /score of the same will be 0 for this one too for that particular user. Further, if the system 102 is able to get the information that the user/customer is discussing about buying a new car in social media (say on Facebook™) even six months before the baby birth, then the weightage/score can be made higher immediately by the system 102. The score may be computed as follows:

$$\text{Score} = \text{F(Preliminary Scoring based on assumption)} + \text{F(Personal Data)} + \text{F(Past Life Events of the customer)} + \text{F(Payment History from Bank or Credit Card)} + \text{F(Policy Information)} + \text{F(Investment Information)} + \text{F(Home Information)} + \text{F(Vehicle Information)} + \text{F(Social Media Information)}.$$

It may be noted that under each item, there may be defined set of conditions. If necessary more conditions will be gradually added. For example, under the item "Vehicle Information" the following three rules may be tested at any point of time to provide any suggestion regarding buying a new bigger vehicle.
Effectively, F (Vehicle Information) = A set of Rules

    1. Does he already have a bigger Vehicle?

    2. Has he bought the bigger vehicle within last 3 years?

    3. What was the year of manufacturing of that bigger vehicle?

The output of executing these rules may give an answer to calculate the score. If the system 102 gets the information that the person has shown strong interest in buying the car (from social media extract), then this may take the highest weightage, though the vehicle information available with the system 102 says that the user already had a bigger vehicle available with him/her, still the scoring/weightage of 'Buying a bigger car' will be much higher.

Further, the system may make a preliminary scoring based on assumption and general knowledge. But gradually, once the system 102 starts gathering more data points, then to provide the initial scoring those data points can be utilized. Initially, it may be assumed that the strength of buying a new car is 1, six months prior to the 'Having a baby event'. But, after the system 102 gathers enough data, either from web analytics (clicks on the provided suggestion) or from new Vehicle information received, this initial score may get changed afterwards. The steps performed by the system 102 for calculating the scores are explained below in detail.

In the first step, the system 102 may identify the likelihood of a prediction to be associated with a life-event. For a particular life-event and identified predictions, the system 102 may calculate/associate number by mining user's social data. According to embodiments, finding the predictions may be driven by primarily two factors i.e., identifying and retrieving content related to the topic of interest, and measuring the polarity of each data item. The prediction (P) value may be calculated using the below formula:

$$P_i = \sum_{k=a}^{z} W_{ik} * C_{ik} \Big/ \sum_{k=a}^{z} W_{ik}$$

Where, $C_{ik}$ = Conditions on which $P_i$ is dependent; and $W_{ik}$ = Weightage of $C_{ik}$ in this context for $P_i$.

Further, the condition (C) may be calculated using the following steps as listed below:

    a) Maintaining positive and negative keywords which can influence the prediction. Words will be maintained in the order of their importance in this context. (Considering dictionary for similar words will enhance the logic).

b) Performing a lexical analysis of the inputs.

c) Cleaning tokens by removing unwanted/unnecessary words.

d) Matching the condition with positive and negative keywords.

e) Score = positive word count * weight - negative word count * weight

Similarly, the Weightage (W) may be calculated based on following factors.

a) Source - Source of the data. Priority will be given to more authentic source.

   i. LinkedIn™ will get priority over Facebook™ data for professional information.
   ii. Personal blog will get priority over social media.

b) Target - Intended audience to whom message was conveyed. Message sent to close friends or family will get higher value. Close friends or family will be determined by interpersonal communications.

c) Type - Type of the data like desire, love, hate etc.

d) Polarity - Positive or Negative

e) Emotion - Emotional state of the user. Something obvious committed in the good mood may contribute less.

f) Other influence - Influence for gender, location, origin etc.

Thus, the system 102 may associate all the above factors with a number and their cumulative value for determining the weightage.

Now, referring back to the example shown in the figure 3A, the recommending module 218 of the system 102 (based on the above analysis) may recommend those service(s) to the customer (Rahul) which is on priority based on the current-stage information and the one or more future-actions determined. As shown in the figure 3A, the future-actions determined for Rahul may comprise "buying 2/3 bhk flat", "child future savings", and "term insurance".

But, based on the current-stage information, the recommending module 212 may recommend only two services corresponding to only two future-actions out of the three-future actions determined. This is because, the recommending module 218 may judge the purchasing capability of the customer (Rahul) and then prioritizes the services to be recommended. In this example, the recommending module 218 has recommended one or more services corresponding to "property buying plans" and "term insurance plans" to the customer (Rahul). The recommending module 218 has dropped the services to be recommended corresponding to the future-action "Child future savings" because that can be purchased later by Rahul as it doesn't seems to be an immediate need for him.

According to other embodiments of present disclosure, the recommending module 218 may recommend the services corresponding to each of the future-actions determined by the determining module 216. Thus, the system 102 provides the solution for the customer's end-to-end requirement on the common platform. Further, the system may further comprise the generating module 220 to generate an animated character/robot/humanoid for guiding the customer while recommending the at least one of the plurality of services.

According to embodiments of present disclosure, the customers may rate the plurality of service providers based on their experiences with the one or more services provided by the plurality of service providers. Further, the system 102 may itself rate the plurality of service providers based on how the customers in his/her 1st, 2nd and 3rd degree of relationship and network have purchased the one or more services from the service providers and what have been their experience with them.

According to the embodiments of present disclosure, different scenarios may be taken into consideration by the system 102 while recommending the one or more services. For example, if the friends and families of the customer are insured with an insurance company (A) and have got excellent service for certain types of features and products, it is likely that the customer will purchase that instead of limiting his/her choices to demographic details.

According to embodiments of present disclosure, the system 102 may be implemented as the software applications termed as "My Personal Assistance" as shown in figure 3B for providing personal assistance to the customers. The "My Personal Assistance" application may integrate home, health, car, investment data, and an architecture and methodology therein orchestrating synergistic customer engagements across different life stages of the customers by cross co-relational data analytics across disparate industry data to meet the requirements in seamless manner.

According to embodiments of present disclosure, the details of the customers along with the customer-stage information gathered from physical and virtual world may be stored, manipulated, queried and retrieved on/from a graph database. The graph database may further comprise nodes as entities and relations as edges between the nodes, wherein such nodes and relations may comprise data as (key, value) pair. According to another embodiment of the present disclosure, the system 102 may also gather unstructured data like speech data, image data, text data and the like obtained from various ontology domains.

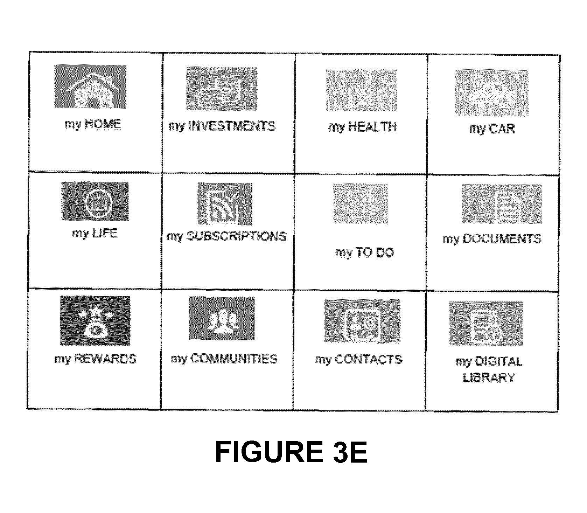

Further, the 'My personal Assistant' solution may comprise various sub-applications (shown in figure 3E) i.e., 'my Home', 'my Investment', 'my Health', 'my Car', 'my Life', 'my Subscriptions', 'my To Do', 'my Document', 'my Rewards', 'my Communities', 'my Contacts' and 'my Digital Library'. However, it is to be understood to a person skilled in the art that these are few of the exemplary elucidations of sub-applications of the solution and may not limit the scope of the present disclosure.

The 'my Life' sub-application may provide an artificial intelligence, behavioral and social analytics methodology for observing, cataloguing and storing life events and life style choices of the customer and network within which the customer engages. Further, the "my Life" sub-application may also create events that potentially occur in future of the user to influence the his/her behavior. The 'My Life' sub-application may further leverage ontology to identify life events and life style choices. Further, the 'My Subscription' comprises managing a database of ecosystem partners and integrators, and subscribing to services provided by them, and registering assets and life events with them.

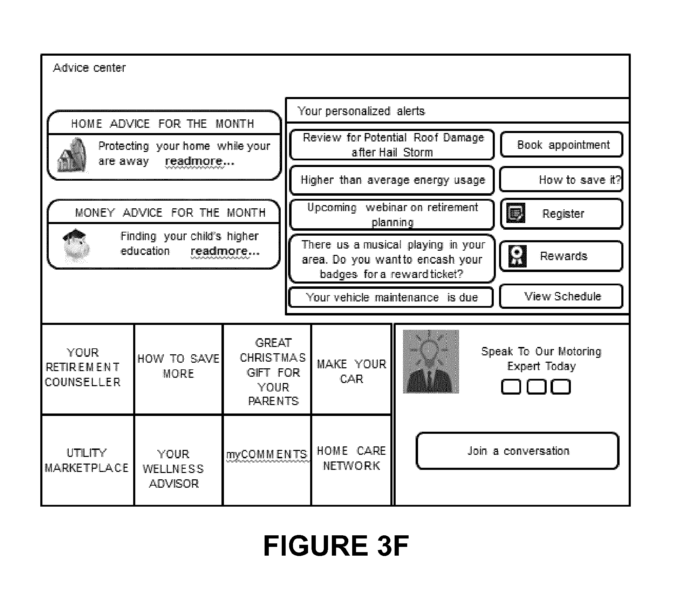

The "My Personal Assistant" solution further comprises 'Advice Center' as shown in figure 3F. The "Advice center" facilitates methodology to incorporate economic, political, demographic, legal social, weather and climate, health data to analyze, predict and recommend contextual advice to the customers. This sub-application further provides dynamic integration with ecosystem service providers, analyzing and selecting best choices using fuzzy logic, and presenting solutions to the customers. Further, the solution related to the home, investment, health and car may be delivered through respective widgets. The "Advice center" may further provide options for the customers to help with taking decisions.

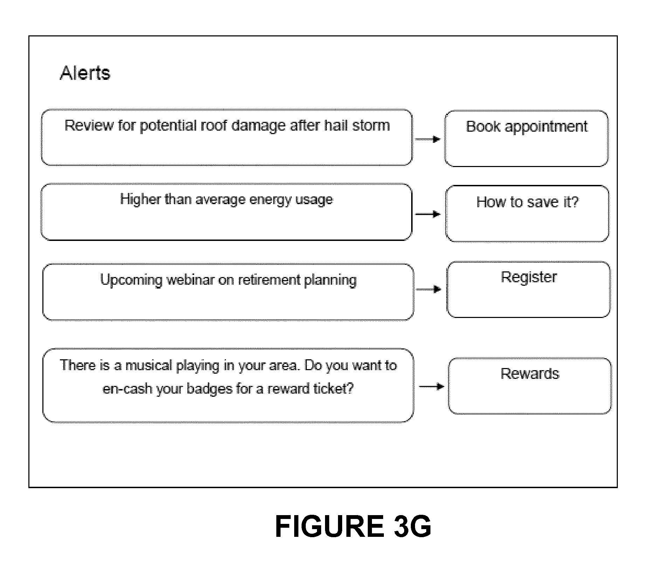

Further, the 'my To Do', may facilitate a list of advice and activities in a calendar form being originated through the "Advice Center" or created by the customer itself. Further, the 'my Communities' is a collaborative workspace for providing virtual connect and discuss interest areas with people across the world. Further, the 'my Contact' may comprise a database for maintaining physical and virtual identity data with the locations data related to the customer. Further, the 'my Digital Library' may comprise of a repository of advice assets and licenses and contracts of assets owned by the customers. The associated data may be present in the form of semi-structured and unstructured data like documents, pictures, images, videos and the like. The system 102 also provides an alert sub-application as shown in figure 3G.

Thus, the system 102 disclosed in the present disclosure brings together services such as home, health, car and investment, linking them to 'my Life' and 'my Subscriptions' to one or many services of social and physical communities and entities. Thus, the present disclosure by integrating various industries or solutions meets customers' end to end requirement for not only home, health, investment, car but also cross-domain concerns such as independently aging as a cross section of home and health, retirement and health, and so on.

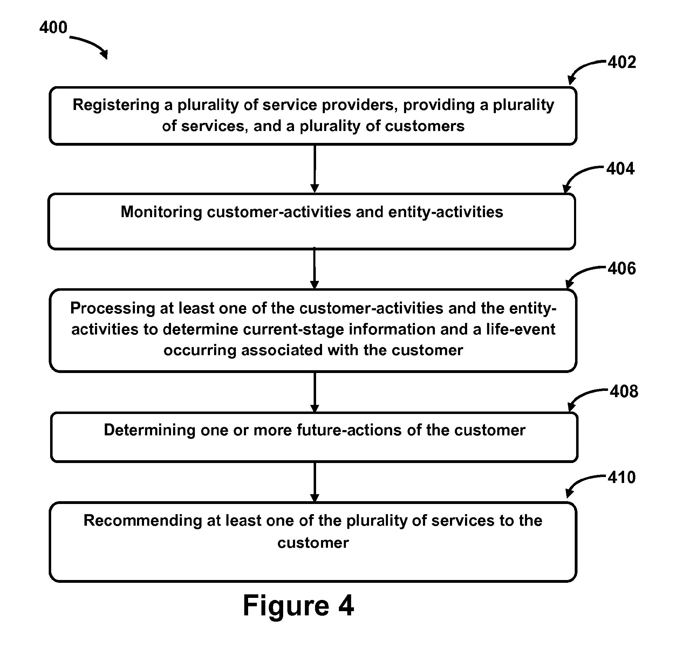

Referring now to Figure 4, a flow diagram depicting an example method 400 for recommending the one or more services to the customer is shown, in accordance with an embodiment of the present subject matter. The method 400 may be described in the general context of computer executable instructions. Generally, computer executable instructions can include routines, programs, objects, components, data structures, procedures, modules, functions, etc., that perform particular functions or implement particular abstract data types. The method 400 may also be practiced in a distributed computing environment where functions are performed by remote processing devices that are linked through a communications network. In a distributed computing environment, computer executable instructions may be located in both local and remote computer storage media, including memory storage devices.

The order in which the method 400 is described is not intended to be construed as a limitation, and any number of the described method blocks can be combined in any order to implement the method 400 or alternate methods. Additionally, individual blocks may be deleted from the method 400 without departing from the spirit and scope of the subject matter described herein. Furthermore, the method 400 can be implemented in any suitable hardware, software, firmware, or combination thereof. However, for ease of explanation, in the embodiments described below, the method 400 may be considered to be implemented in the above described system 102 (Figure 1).

At block 402, a plurality of service providers providing a plurality of services, and a plurality of customers may be registered with the system.

At block 404, customer-activities of a customer from amongst the plurality of customers and entity-activities of one or more entities present in a network of the customer may be monitored from one or more sources. The network may define a relationship between the customer and the one or more entities.

At block 406, at least one of the customer-activities and the entity-activities may be processed in order to determine current-stage information of the customer and a life-event occurring in a life of the customer. Further, the current-stage information of the customer may comprise behavioral pattern, life-style, liabilities, location, purchasing capability, and assets of the customer.

At block 408, one or more future-actions of the customer may be determined based on the occurrence of the life-event.

At block 410, at least one of the plurality of services may be recommended to the customer based on the current-stage information and the one or more future-actions.

Although implementations for methods and systems for recommending one or more services to the customer have been described in language specific to structural features and/or methods, it is to be understood that the appended claims are not necessarily limited to the specific features or methods described. Rather, the specific features and methods are disclosed as examples of implementations for recommending the one or more services by integrating various industries or solutions for meeting customers' end to end requirement.

**Claims**

1.  A method for recommending services to a customer, the method comprising:

    monitoring, by a processor, customer-activities of a customer from amongst a plurality of customers and entity-activities of one or more entities present in a network of the customer, from one or more sources, wherein the network defines a relationship between the customer and the one or more entities;

    processing, by the processor, at least one of the customer-activities and the entity-activities in order to determine

    a current-stage information of the customer comprising behavioral pattern, life-style, liabilities, location, purchasing capability, and assets of the customer, and
    a life-event occurring in a life of the customer;

    determining, by the processor, one or more future-actions of the customer based on the occurrence of the life-event; and
    recommending, by the processor, at least one service of a plurality of services to the customer based on the current-stage information and the one or more future-actions.

2.  The method according to claim 1, wherein the one or more entities comprises family, relatives, and friends of the customer.

3.  The method according to claim 1, wherein the customer-activities comprise transactional activities and non-transactional activities performed by the customer, and wherein the entity-activities comprises social activities performed by the one or more entities, and wherein the one or more sources comprises social networking applications, web applications, and shopping applications.

4.  The method according to claim 1, wherein determining the one or more future-actions of the customer comprises determining a prediction value associated with the one or more future-actions, the prediction value being indicative of likelihood of occurrence of the one or more future-actions.

5.  The method according to claim 4, wherein the prediction value ($P_i$) is determined based on the following equation:

$$P_i = \left. \sum_{k=a}^{z} W_{ik} * C_{ik} \middle/ \sum_{k=a}^{z} W_{ik} \right.$$

where, $P_i$ is the prediction value associated with a future action of the one or more future actions,
$C_{ik}$ = Conditions on which $P_i$ is dependent, and
$W_{ik}$ = Weightage of $C_{ik}$ in context of the future action for $P_i$.

6.  The method according to claim 1, further comprising:

    determining distances of one or more future actions from the life-event, wherein a distance of a future action amongst the one or more future actions is indicative of a time interval between the future-action and the life-event, and wherein the distance comprises a numeral and a polarity; and
    determining strengths of the one or more future-actions based on the distance associated with the future action.

12

7. The method according to claim 6, wherein recommending the at least one service comprises prioritizing the at least one service for recommending based on the current-stage information and the strengths of the one or more future-actions of the customer.

8. A system 102 for recommending services to a customer, the system 102 comprises:

   a processor 202;
   a memory 206 coupled with the processor 202, wherein the processor 202 executes a plurality of modules 208 stored in the memory 206, and where the plurality of modules 208 comprises:

   monitoring module 212 to monitor customer-activities of a customer from amongst a plurality of customers and entity-activities of one or more entities present in a network of the customer, from one or more sources, wherein the network defines a relationship between the customer and the one or more entities;
   processing module 214 to process at least one of the customer-activities and the entity-activities in order to determine

   a current-stage information of the customer comprising behavioral pattern, life-style, liabilities, location, purchasing capability, and assets of the customer, and
   a life-event occurring in a life of the customer;

   determining module 216 to determine one or more future-actions of the customer based on the occurrence of the life-event; and
   recommending module 218 to recommend at least one service of a plurality of services to the customer based on the current-stage information and the one or more future-actions.

9. A system 102 according to claim 8, further comprising generating module to generate animated character for guiding the customer while recommending the at least one of the plurality of services.

10. A system 102 according to claim 8, wherein the customer-activities comprise transactional activities and non-transactional activities performed by the customer, and wherein the entity-activities comprises social activities performed by the one or more entities, and wherein the one or more sources comprises social networking applications, web applications, and shopping applications.

11. A system 102 according to claim 8, further comprising a registering module to register a plurality of service providers providing the plurality of services, and the plurality of customers.

12. A system 102 according to claim 8, wherein the determining module 216 further determines a prediction value associated with the one or more future actions, the prediction value being indicative of likelihood of occurrence of the one or more future-actions.

13. A system according to claim 12, wherein the prediction value ($P_i$) is determined based on the following equation:

$$\mathrm{P}_i = \sum_{k=a}^{z} W_{ik} * C_{ik} \Big/ \sum_{k=a}^{z} W_{ik}$$

where, $P_i$ is the prediction value associated with a future action of the one or more future actions,
$C_{ik}$ = Conditions on which $P_i$ is dependent, and
$W_{ik}$ = Weightage of $C_{ik}$ in context of the future action for $P_i$.

14. A system according to claim 8, wherein the determining module 216 further:

   determines distances of the one or more future actions from the life-event, wherein a distance of a future action amongst the one or more future actions is indicative of a time interval between the future-action and the life-event, and wherein the distance comprises a numeral and a polarity; and
   determines strengths of the one or more future-actions based on the distance associated with the future action.

15. A system according to claim 14, wherein the recommending module 218 prioritizes the at least one service for recommending based on the current-stage information and the strengths of the one or more future-actions of the customer.

100

SYSTEM (102)

NETWORK

(106)

104 - 1     104 - 2     104 - 3

104 - N

# Figure 1

**200**

SYSTEM (102)

PROCESSOR(S) (202)     INTERFACE(S) (204)

MEMORY (206)

MODULES (208)

REGISTERING MODULE (210)

MONITORING MODULE (212)

PROCESSING MODULE (214)

DETERMINING MODULE (216)

GENERATING MODULE (218)

OTHER MODULES (220)

DATA (222)

ACTIVITY DATABASE (224)

OTHER DATA (226)

# Figure 2

Figure 3A

**Figure 3B**

**Figure 3C**

**Figure 3D**

# FIGURE 3E

Advice center

HOME ADVICE FOR THE MONTH

Protecting your home while your are away   readmore...

MONEY ADVICE FOR THE MONTH

Finding your child's higher education   readmore...

Your personalized alerts

| Review for Potential Roof Damage after Hail Storm | Book appointment |
| Higher than average energy usage | How to save it? |
| Upcoming webinar on retirement planning | Register |
| There us a musical playing in your area. Do you want to encash your badges for a reward ticket? | Rewards |
| Your vehicle maintenance is due | View Schedule |

| YOUR RETIREMENT COUNSELLER | HOW TO SAVE MORE | GREAT CHRISTMAS GIFT FOR YOUR PARENTS | MAKE YOUR CAR | Speak To Our Motoring Expert Today |
| UTILITY MARKETPLACE | YOUR WELLNESS ADVISOR | myCOMMENTS | HOME CARE NETWORK | Join a conversation |

# FIGURE 3F

## Alerts

| | |
|---|---|
| Review for potential roof damage after hail storm | → Book appointment |
| Higher than average energy usage | → How to save it? |
| Upcoming webinar on retirement planning | → Register |
| There is a musical playing in your area. Do you want to en-cash your badges for a reward ticket? | → Rewards |

# FIGURE 3G

**400**

**402**

Registering a plurality of service providers, providing a plurality of services, and a plurality of customers

**404**

Monitoring customer-activities and entity-activities

**406**

Processing at least one of the customer-activities and the entity-activities to determine current-stage information and a life-event occurring associated with the customer

**408**

Determining one or more future-actions of the customer

**410**

Recommending at least one of the plurality of services to the customer

# Figure 4

Europäisches
Patentamt

European
Patent Office

Office européen
des brevets

# EUROPEAN SEARCH REPORT

Application Number

EP 15 17 9500

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/078766 A1 (ROSE DAVID T [US] ET AL) 29 March 2012 (2012-03-29) * the whole document * ----- | 1-15 | INV. G06Q40/08 G06Q30/06 G06Q50/10 |
| X | US 2013/173419 A1 (FARBER BENJAMIN S [US] ET AL) 4 July 2013 (2013-07-04) * the whole document * ----- | 1-15 | |
| X | US 2014/189014 A1 (DOLAN PETER [US] ET AL) 3 July 2014 (2014-07-03) * the whole document * ----- | 1-15 | |
| X | US 2014/006166 A1 (CHIANG CHI-HAO [CA] ET AL) 2 January 2014 (2014-01-02) * the whole document * ----- | 1-15 | |

TECHNICAL FIELDS
SEARCHED    (IPC)

G06Q

The present search report has been drawn up for all claims

| Place of search | Date of completion of the search | Examiner |
|---|---|---|
| Munich | 8 October 2015 | Mülthaler, Evelyn |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 15 17 9500

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2015

| Patent document cited in search report | | Publication date | Patent family member(s) | | Publication date |
|---|---|---|---|---|---|
| US 2012078766 | A1 | 29-03-2012 | NONE | | |
| US 2013173419 | A1 | 04-07-2013 | NONE | | |
| US 2014189014 | A1 | 03-07-2014 | US | 8229873 B1 | 24-07-2012 |
| | | | US | 2012290522 A1 | 15-11-2012 |
| | | | US | 2014189014 A1 | 03-07-2014 |
| US 2014006166 | A1 | 02-01-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2501MUM2014